(19) Europäisches Patentamt

European Patent Office

Office européen des brevets

(11) **EP 2 953 068 A1**

(12) **EUROPEAN PATENT APPLICATION**

(43) Date of publication:
09.12.2015 Bulletin 2015/50

(51) Int Cl.:
***G06Q 10/02*** *(2012.01)*

(21) Application number: 15151144.1

(22) Date of filing: 14.01.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **06.06.2014 CN 201410250656**

(71) Applicant: **Xiaomi Inc.**
**Beijing 100085 (CN)**

(72) Inventors:
• **Kangshang, Mingxue**
**100085 Beijing (CN)**
• **Nong, Zhilin**
**100085 Beijing (CN)**
• **Sha, Zhenyu**
**100085 Beijing (CN)**

(74) Representative: **Delumeau, François Guy et al**
**Cabinet Beau de Loménie**
**158, rue de l'Université**
**75340 Paris Cedex 07 (FR)**

(54) **Prompting method and device for seat selection**

(57) The present disclosure relates to a prompting method and device for seat selection. The method includes: receiving (S11) a viewing field ID; determining (S12) seat IDs corresponding to the viewing field ID and seat parameters corresponding to the seat IDs in a database; according to the seat parameters corresponding to the seat ID, calculating (S13) an angle between the line segment from the physical seat corresponding to the seat ID to a preset position of the viewing area and the plane of the viewing area, and selecting (S14) seat IDs corresponding to angles within a preset range as target seat IDs; outputting seat IDs.

| |
|---|
| Receiving a viewing field ID — S11 |
| Determining seat IDs corresponding to the viewing field ID and seat parameters corresponding to the seat IDs in a database — S12 |
| Calculating an angle between a line segment from a physical seat corresponding to the seat ID to a preset position of the viewing area and a plane of the viewing area , and selecting seat IDs corresponding to the angles within a preset range as target seat IDs — S13 |
| Outputting the target seat IDs — S14 |

Fig. 1

**Description**

TECHNICAL FIELD

The present disclosure relates to the field of communication technology, and more particularly, to a prompting method and device for seat selection.

BACKGROUND

At present, seat selection function is provided in ticketing systems for cinemas, theaters and vocal concerts. A user simply clicks the desired seats in the seat selection interface provided by the ticketing system; the system reserves the clicked seats for the user.

Although the user can select his or her desired seats through the ticketing system, the selected seats are sometimes not at the best viewing positions. For example, due to the viewing angles or viewing distances, when seating on some seats of a cinema, users need to turn heads left or right for the movie screen during viewing, or need to look up at the screen for a long time, which makes the users feel fatigue and degrade the viewing experience.

Since user do not know which seats are more ideal for watching, traditional seat selection methods wastes time of users for seat selection, and fails to select seats with optimal viewing effects.

SUMMARY

In order to overcome problems in related arts, the present disclosure provides a prompting method and device for seat selection to prompt which seats are of best viewing effect, hence reducing time costs for a user to select seats.

According to a first aspect of embodiment of the present disclosure, there is provided a prompting method for seat selection, comprising: receiving a viewing field ID; determining seat IDs corresponding to the viewing field ID and seat parameters corresponding to the seat IDs in a database; according to the seat parameters corresponding to the seat ID, calculating an angle between a line segment from a physical seat corresponding to the seat ID to a preset position of the viewing area and a plane of the viewing area, and selecting seat IDs corresponding to the angles within a preset range as target seat IDs; outputting the target seat IDs.

Optionally, the step of according to seat parameters corresponding to the seat ID, calculating an angle between a line segment from a physical seat corresponding to the seat ID to a preset position of the viewing area and a plane of the viewing area, and selecting seat IDs corresponding to the angles within a preset range as target seat IDs includes: according to the seat parameters corresponding to the seat ID, calculating an angle between a shortest line segment from the physical seat corresponding to the seat ID to a top end of the viewing area and the plane of the viewing area, and selecting the seat IDs corresponding to the angles within the preset range as target seat IDs.

Optionally, the step of according to seat parameters corresponding to the seat ID, calculating an angle between a line segment from a physical seat corresponding to the seat ID to a preset position of the viewing area and a plane of the viewing area, and selecting seat IDs corresponding to the angles within a preset range as target seat IDs comprises: according to the seat parameters corresponding to the seat ID, calculating a first angle between a shortest line segment from the physical seat corresponding to the seat ID to a right end of the viewing area and the plane of the viewing area, calculating an second angle between a shortest line segment from the physical seat corresponding to the seat ID to a left end of the viewing area and the plane of the viewing area, taking a sum of the first angle and the second angle as a third angle, and selecting seat IDs corresponding to the third angles within a preset range as target seat IDs.

Optionally, the step of according to seat parameters corresponding to the seat ID, calculating an angle between a line segment from a physical seat corresponding to the seat ID to a preset position of the viewing area and a plane of the viewing area, and selecting seat IDs corresponding to the angles within a preset range as target seat IDs comprises: according to the seat parameters corresponding to the seat ID, calculating a first angle between a shortest line segment from the physical seat corresponding to the seat ID to a top end of the viewing area and the plane of the viewing area, and selecting seat IDs corresponding to the first angles within a first preset range as first target seat IDs; according to seat parameters corresponding to the first target seat IDs, calculating an second angle between a shortest line segment from a physical seat corresponding to the first target seat ID to a right end of the viewing area and the plane of the viewing area, calculating a third angle between a shortest line segment from the physical seat corresponding to the first target seat ID to a left end of the viewing area and the plane of the viewing area, taking a sum of the second angle and the third angle as a fourth angle, and selecting first target seat IDs corresponding to the fourth angles within a second preset range as target seat IDs.

Optionally, the method further comprises: determining whether a distance between the physical seat corresponding to the target seat ID and a tone source is smaller than a threshold; executing the step of outputting the target seat IDs if the distance between the physical seat corresponding to the target seat IDs and the tone source is less than or equal to the threshold; outputting a prompting message that the tone source is too far away if the distance between the physical seat corresponding to the target seat IDs and the tone source is greater than the threshold.

Optionally, the method further comprises: determining whether the target seat IDs are history data; executing the step of outputting the target seat IDs if the target seat IDs are history data; outputting a prompting message that the target seat IDs are not history data if the target seat IDs are not history data.

Optionally, the method further comprises: determining whether a time of occurrences of the target seat IDs in history data is greater than or equal to a threshold; executing the step of outputting the target seat IDs if the time of occurrences of the target seat IDs in history data is greater than or equal to a threshold; outputting a prompting message that the time of occurrences of the target seat IDs in history data is smaller than the threshold if the time of occurrences of the target seat IDs in history data is smaller than the threshold.

According to a second aspect of embodiments of the present disclosure, there is provided a prompting device for seat selection, comprising: a receiving module configured to receive a viewing field ID; a determining module configured to determine seat IDs corresponding to the viewing field ID and seat parameters corresponding to the seat IDs in a database; a selecting module configured, according to seat parameters corresponding to the seat ID, to calculate an angle between a line segment from a physical seat corresponding to the seat ID to a preset position of the viewing area and a plane of the viewing area, and to select seat IDs corresponding to the angles within a preset range as target seat IDs; an outputting module configured to output the target seat IDs.

Optionally, the selecting module comprises: a first calculating unit configured, according to the seat parameters corresponding to the seat ID, to calculate an angle between a shortest line segment from the physical seat corresponding to the seat ID to a top end of the viewing area and the plane of the viewing area; a first selecting unit configured to select the seat IDs corresponding to the angles within a preset range as target seat IDs.

Optionally, the selecting module comprises: a second calculating unit configured to calculate a first angle between a shortest line segment from the physical seat corresponding to the seat ID to a right end of the viewing area and the plane of the viewing area, to calculate a second angle between a shortest line segment from the physical seat corresponding to the seat ID to a left end of the viewing area and the plane of the viewing area, according to the seat parameters corresponding to the seat ID, and to take a sum of the first angle and the second angle as a third angle; and a second selecting unit configured to select seat IDs corresponding to the first angles within a preset range as target seat IDs.

Optionally, the selecting module comprises: a third calculating unit configured, according to the seat parameters corresponding to the seat ID, to calculate a first angle between a shortest line segment from the physical seat corresponding to the seat ID to a top end of the viewing area and the plane of the viewing area; a third selecting unit configured to select seat IDs corresponding to the first angles within a first preset range as first target seat IDs; a fourth calculating unit configured to calculate a second angle between a shortest line segment from the physical seat corresponding to the first target seat ID to a right end of the viewing area and the plane of the viewing area, to calculate a third angle between a shortest line segment from the physical seat corresponding to the first target seat ID to a left end of the viewing area and the plane of the viewing area, according to the seat parameters corresponding to the first target seat ID; and to take a sum of the second angle and the third angle as a fourth angle; a fourth selecting unit configured to select first target seat IDs corresponding to the fourth angles within a second preset range as target seat IDs.

Optionally, the device further comprises: a first determining module configured to determine whether a distance between the physical seat corresponding to the target seat ID and a tone source is smaller than a threshold; a first executing module configured to execute the outputting module if the distance between the physical seat corresponding to the target seat ID and the tone source is less than or equal to the threshold; and to output a prompting message that the tone source is too far away when the distance between the physical seat corresponding to the target seat IDs and the tone source is greater than the threshold.

Optionally, the device further comprises: a second determining module configured to determine whether the target seat ID is history data; a second executing module configured to execute the outputting module if the target seat ID is history data; and to output a prompting message that the target seat ID is not history data if the target seat ID is not history data.

Optionally, the method further comprises: a third determining module configured to determine whether a time of occurrences of the target seat IDs in history data is greater than or equal to a threshold; a third executing module configured to execute the outputting module if the time of occurrences of the target seat ID in history data is greater than or equal to the threshold; and to output a prompting message that the time of occurrences of the target seat IDs in history data is smaller than the threshold if the time of occurrences of the target seat IDs in history data is smaller than the threshold.

According to a third aspect of embodiments of the present disclosure, there is provided a prompting device for seat selection, comprising: a processor; a memory for storing instructions executable by the processor. The processor is configured to perform: receiving a viewing field ID; determining seat IDs corresponding to the viewing field ID and seat parameters corresponding to the seat IDs in a database; according to seat parameters corresponding to the seat ID, calculating an angle between a line segment from a physical seat corresponding to the seat ID to a preset position of the viewing area and a plane of the viewing area, and selecting seat IDs corresponding to the angles within a preset range as target seat IDs; outputting the target seat IDs.

In one particular embodiment, the steps of the prompting method for seat selection are determined by computer program instructions.

Consequently, according to a fourth aspect, the invention is also directed to a computer program for executing the steps of a prompting method for seat selection as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can comprise storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical proposal provided in embodiments of the present disclosure may include the following beneficial effects. Before the user selects seats, the viewing field ID input by the user needs to be received first, according to which the seat IDs and seat parameters corresponding to the seat IDs can be determined, and the angle between the line segment from the physical seat corresponding to the seat ID to a preset position of the viewing area and the plane of the viewing area is calculated in turn. Since it is possible to know that angles within a preset range are best viewing positions, target seat IDs corresponding to angles within a preset range are output for the user to select. Therefore, the solution proposed in the present disclosure can offer target seat IDs with best viewing effect and thereby reduce time costs for a user to select seats.

It is appreciated that the above general description and the following detail description are only illustrative and explanatory rather than limiting the disclosure.

BRIEF DESCRIPTION OF THE DRAWINGS

Here, accompanying drawings, which are incorporated into the description and constitute a part of the description, show embodiments in accordance with the present disclosure and serve to explain principles of the present disclosure together with the description.

Fig. 1 is a flow chart showing a prompting method for seat selection according to an illustrative embodiment.

Fig. 2 is a longitudinal sectional view of a projection hall of cinema according to an illustrative embodiment.

Fig. 3 is a block diagram showing a prompting device for seat selection according to an illustrative embodiment.

Fig. 4 is a block diagram showing a prompting device for seat selection according to an illustrative embodiment.

DETAILED DESCRIPTION

Illustrative embodiments will be described in detail here, with examples of which represented in accompanying drawings. When the following description relates to accompanying drawings, unless otherwise stated, the same numeral references in different drawings represent same or similar elements. Implementations described in the following illustrative embodiments do not represent all implementations according to the present disclosure. On the contrary, they are only examples of the device and method according to some aspects of the present disclosure as detailed in the appended claims.

Embodiment I

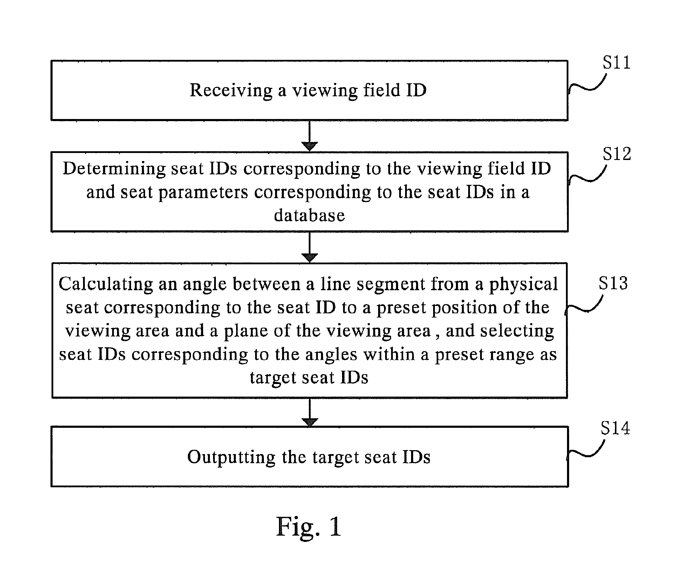

Fig. 1 is a flow chart showing a prompting method for seat selection according to an illustrative embodiment. As shown in Fig. 1, the prompting method for seat selection shown in Fig. 1 may be applied in a terminal. The prompting method for seat selection provided in the present disclosure may prompt identifications for target seats with best viewing effect, thereby reducing time costs of a user for seat selection. The method comprises the following steps.

In step S11, a viewing field identification is received.

The viewing field identification (ID) may be input by a user. The viewing field ID may be a number, a name or other type of characters of the viewing field. For example, the viewing field ID may be "projection hall 11, Beijing Cinema". In addition, the viewing field may be a cinema, an opera house or a vocal concert field.

In step S12, seat IDs corresponding to the viewing field ID and seat parameters corresponding to the seat IDs are determined in a database.

After receiving the viewing field ID, seat IDs corresponding to the viewing field ID and seat parameters corresponding to the seat IDs need to be look up in the database. In general, each viewing field ID may have a plurality of corresponding seat IDs, and each seat ID may have one corresponding seat parameter.

A seat ID may be row number and column number of a physical seat, such as, a seat ID of row 5 & column 3 meaning the 3rd position in the 5th row. The seat parameter may include a plurality of parameters, such as, length and width of the viewing area; linear length of the bottom of the viewing area perpendicular to the floor; linear length of the physical seat corresponding to each seat ID perpendicular to the viewing area; linear length of the physical seat corresponding to each seat ID perpendicular to the floor; length of shortest segment from the physical seat corresponding to each seat ID to the top of the viewing area; length of shortest segment from the physical seat corresponding to each seat ID to the left end of the viewing area, and length of shortest segment from the physical seat corresponding to each seat ID to the right end of the viewing area.

In step S13, according to seat parameters corresponding to the seat ID, an angle between the line segment from the physical seat corresponding to the seat ID to a preset position of the viewing area and the plane of the viewing area is calculated, and seat IDs corresponding to angles within a preset range are selected as target seat IDs.

The viewing area may be the movie screen or the stage of an opera house. The preset position of the viewing area may be the top end of the viewing area or left right ends of the viewing area. The line segment from the physical seat corresponding to the seat ID to the preset position of the viewing area may be regarded as the line of sight of the user when viewing from the physical seat corresponding to a certain seat ID to the preset position of the viewing area. The line segment may be regarded as the line of sight. Calculating the angle between the line segment from the physical seat corresponding to the seat ID to different positions of the viewing area and the plane of the viewing area has different meanings.

For example, according to seat parameters corresponding to the seat ID, an angle between the shortest line segment from the physical seat corresponding to the seat ID to the top end of the viewing area and the plane of the viewing area is calculated, and seat IDs corresponding to angles within a preset range are selected as target seat IDs. The purpose of calculating the angle is to determine whether the user needs to look up towards the viewing area for a long time. If the angle is smaller than 55 degree, the angle, between the shortest line segment from the physical seat corresponding to the seat ID to the top end of the viewing area and the line segment of the physical seat corresponding to the seat ID perpendicular to the plane of viewing area, is greater than 35 degree, then a user sitting in the physical seat of the seat ID corresponding to this angle needs to look up towards the viewing area for a long time; if the angle is greater than or equal to 55 degree, the angle between the shortest line segment from the physical seat corresponding to the seat ID to the top end of the viewing area and the line segment of the physical seat corresponding to the seat ID perpendicular to the plane of viewing area is smaller than 35 degree, then a user sitting in the physical seat of the seat ID corresponding to this angle needs not to look up for a long time towards the viewing area. Therefore, the preset range may be 0 degree to 35 degree. Therefore, seat IDs corresponding to angles within the range of 0 degree to 35 degree are selected as target seat IDs. After the user selects the targets as the real seats corresponding to the IDs, cervical vertebrae fatigue can be avoided to improve the user's viewing experience.

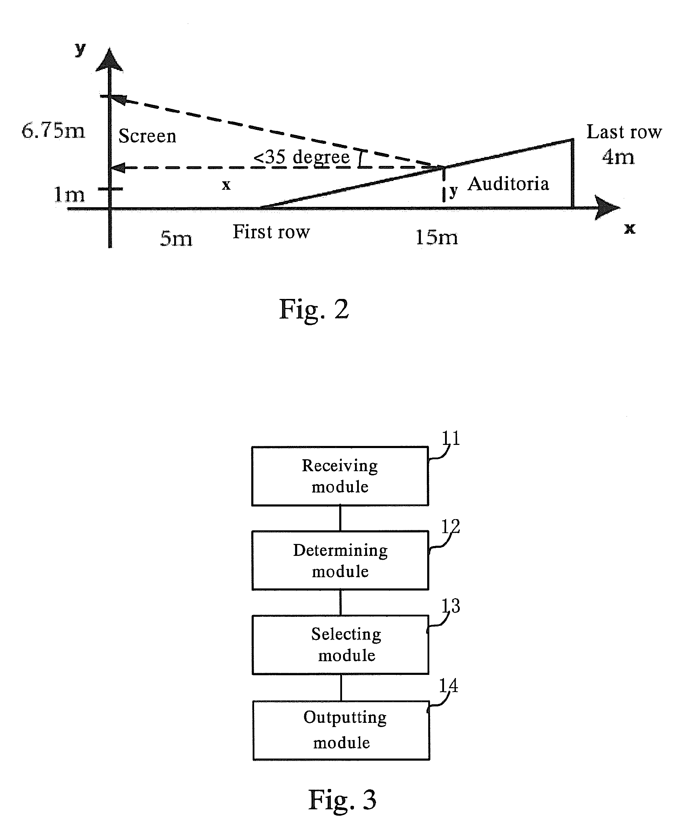

Description will be given by application examples in combination of the above example. Referring to Fig. 2, which shows a longitudinal sectional view of a projection hall of cinema. For the projection hall of cinema shown in Fig. 2, the last row of seats are 4m higher than the first row in the vertical direction, and there are 16 rows of seats in the hall. Assuming the horizon distance between rows is 1m, then the horizon distance between the last row and the first row is about 15m, therefore it is calculated that seats for auditoria is 15°higher row by row. It is assumed that a screen with a width of 9m and a length of 6.75mis provided for the projection hall. The distance from the bottom of screen to the ground is 1m, and the distance from the screen to the first row is 5m. X denotes the distance from audience to screen, then the altitude of his position to the ground is: y=(x-5)4/15. To fulfill the condition that the angle between the line-of-sight to the top end direction and the horizontal plane is smaller than 35°, the equation is:

$$\arctan \frac{7.75 - \frac{4}{15}(\mathrm{x} - 5)}{\mathrm{x}} < 35°$$

The final solution is x>9.36 m. The horizontal distance between the 5th row and the screen is 9m, the horizon distance between the 6th row and the screen is 10m, that is, only from the 6th row on, the angle between the line of sight towards the top end of the screen and the horizontal plane will be smaller than 35°. Therefore, in order to prevent a user from looking up towards the screen for a long time, seats with seat IDs behind the 6th row are output to inform the user this situation.

As another example, according to seat parameters corresponding to the seat ID, a first angle between the shortest line segment from the physical seat corresponding to the seat ID to the right end of the viewing area and the plane of the viewing area is calculated; an second angle between the shortest line segment from the physical seat corresponding to the seat ID to the left end of the viewing area and the plane of the viewing area is calculated; the sum of the first angle and the second angle is taken as a third angle; and seat IDs corresponding to third angles within a preset range are selected as target seat IDs. The purpose of calculating the third angle is to find out whether a user needs to often turn head left and right towards the viewing area or whether the user is too far from the viewing area. If the third angle is smaller than 140°, then the angle between the shortest line segment from the physical seat corresponding to the seat ID to the right end of the viewing area and the shortest line segment from the physical seat corresponding to the seat ID to the left end of the viewing area is greater than 40 degree, the physical seat of the seat ID where the user is located is too close to the viewing area, then the user sitting in the physical seat of the seat ID corresponding to this angle needs to turn his or her head left or right to view the entire viewing area. If the third angle is greater than 154°, then the angle between the shortest line segment from the physical seat corresponding to the seat ID to the right end of the viewing area and the shortest line segment from the physical seat corresponding to the seat ID to the left end of the viewing area is smaller than 26 degree, the physical seat of the seat ID where the user is located is too far from the viewing area, then the user sitting in the physical seat of the seat ID corresponding to this angle might not view the viewing area clearly. If the third angle is greater than 140 degree and smaller than 154 degree, the angle between the shortest line segment from the physical seat corresponding to the seat ID to the right end of the viewing area and the shortest line segment from the physical seat corresponding to the seat ID to the left end of the viewing area is to be between 26 degree and 40 degree. Therefore, selecting the seat IDs corresponding to the third angle in the range of 26 degree to 40 degree as target seat IDs can make the distance from the physical seat of seat ID where is user is to the viewing area moderate, neither too close nor too far, such that the user can not only view the viewing area clearly, but also needs not turn head left and right, thereby improving viewing experience of the user.

As another example, according to seat parameters corresponding to the seat ID, a first angle between the shortest line segment from the physical seat corresponding to the seat ID to the top end of the viewing area and the plane of the viewing area is calculated, and seat IDs corresponding to the first angles within a first preset range are selected as first target seat IDs. According to seat parameters corresponding to the first target seat IDs, an second angle between the shortest line segment from the physical seat corresponding to the first target seat ID to the right end of the viewing area and the plane of the viewing area is calculated; an third angle between the shortest line segment from the physical seat corresponding to the first target seat ID to the left end of the viewing area and the plane of the viewing area is calculated; the sum of the second angle and the third angle is taken as a fourth angle; and the first seat IDs corresponding to fourth angles within a second preset range are selected as target seat IDs. Since the present example is a combination of the two above-mentioned examples, it has advantages of the above-mentioned two examples. With the physical seats corresponding to the finally selected target seat IDs, it's possible to view the viewing area clearly without turning head left and right, and further to avoid long time looking up, so as to reduce the probability of cervical vertebrae fatigue and enhance user's viewing experience.

In step S14, the target seat IDs are output.

When selecting target seat IDs with appropriate viewing distances, target seat IDs are output for the user to select.

In the embodiment shown in Fig. 1, before the user selects seats, the viewing field ID input by the user needs to be received firstly, according to which the seat IDs and seat parameters corresponding to the seat IDs can be determined, and the angle between the line segment from the physical seat corresponding to the seat ID to a preset position of the viewing area and the plane of the viewing area is calculated in turn. Since it is possible to know that angles within a preset range are best viewing positions, target seat IDs corresponding to angles within a preset range are output for the user to select. Therefore, the solution proposed in the present disclosure can offer target seat IDs with best viewing effect and thereby reduce time costs for a user to select seats.

Optionally, In the embodiment shown in Fig. 1, the solution provided in the present disclosure may further comprise the following steps: determining whether the distance between a physical seat corresponding to a target seat ID and the tone source is smaller than a threshold; executing step S14 if the distance between the physical seat corresponding to the target seat ID and the tone source is smaller than or equal to the threshold; and outputting a prompting message of too far tone source if the distance between the physical seat corresponding to the target seat ID and the tone source is larger than the threshold. For example, the threshold for perceiving sound-image time difference of human being is about -160 ms to +65 ms, that is, sound 0.065s ahead of image to 0.16s after image would be acceptable. The propagation velocity of sound in air is about 340 m/s. Since sound can travel a distance of 54m in 0.16s, the threshold is set to be 54m. If the distance between a physical seat corresponding to a target seat ID and a tone source is less than or equal to 54m, it is considered nonsynchronous sound and image phenomenon will not occur for the physical seat corresponding to the target seat ID, therefore step S14 is executed to output target seat IDs. If the distance between a physical seat corresponding to a target seat ID and a tone source is greater than 54m, it is considered nonsynchronous sound and image phenomenon will occur for the physical seat corresponding to the target seat ID, therefore a prompting message of too far tone source is output to inform the user that nonsynchronous sound and image phenomenon is likely to occur for the physical seat corresponding to the target seat ID.

Optionally, In the embodiment shown in Fig. 1, the solution provided in the present disclosure may further comprise the following steps: determining whether the target seat ID is history data; executing step S14 if the target seat ID is history data; and outputting a prompting message that the target seat ID is not history data if the target seat ID is not history data. For example, seat ID of history data includes row 7 & column 8. If the target seat ID is row 7 & column 8, it means that the user is more like the target seat ID, then target seat ID row 7 & column 8 is output; if the target seat ID is row 6 & column 9, it means that the user is not so like the target seat ID, characters "the target seat ID row 7 & column 8 is not history data" may be output to inform the user. Therefore, seat IDs that have been selected by the user may be output for the user to select his preferred seats in target seat IDs.

Optionally, In the embodiment shown in Fig. 1, the solution provided in the present disclosure may further comprise the following steps: determining whether time of occurrences of the target seat ID in history data is greater than or equal to a threshold; executing step S14 if the time of occurrences of the target seat ID in history data is greater than or equal to the threshold; and outputting the prompting message that time of occurrences of the target seat ID in history data is smaller than the threshold if the time of occurrences of the target seat ID in the history data is smaller than the threshold. Among, History data means the seat has been selected by the same user in the past,For example, if the target seat ID is row 7 & column 8, and the seat ID row 7 & column 8 occurs 5 times in history data, assuming the threshold is 3, since the time of occurrences of seat ID row 7 & column 8 in history data is 5 which is greater than the threshold 3, it means that the user likes the target seat ID and target seat ID row 7 & column 8 is output. If the target seat ID is row 7 & column 8, and the seat ID row 7 & column 8 occurs 2 times in history data, assuming the threshold is 3, since the time of occurrences of seat ID row 7 & column 8 in history data is 2 which is smaller than the threshold 3, it means that the user does not like the target seat ID and characters "the 2 occurrences of target seat ID row 7 & column 8 in history data is smaller than the threshold 3" may be output to inform the user. Therefore, seat IDs that have been selected and selected for more times by the user may be output for the user to select his preferred seats in target seat IDs.

Embodiment II

Fig. 3 is a block diagram showing a prompting device for seat selection according to an illustrative embodiment. The prompting device for seat selection proposed in the present disclosure can offer target seat IDs with best viewing effect and thereby reduce time costs for a user to select seats. Referring to Fig. 3, the device comprises a receiving module 11, a determining module 12, a selecting module 13 and an outputting module 14.
The receiving module 11 is configured to receive a viewing field ID.
The determining module 12 is configured to determine seat IDs corresponding to the viewing field ID and seat parameters corresponding to the seat IDs in a database.
The selecting module 13 is configured to calculate an angle between the line segment from the physical seat corresponding to the seat ID to a preset position of the viewing area and the plane of the viewing area according to seat parameters corresponding to the seat ID, and to select seat IDs corresponding to angles within a preset range as target seat IDs.
The outputting module 14 is configured to output target seat IDs.
Optionally, the selecting module provided in the present disclosure may comprise the following units: a first calculating unit configured to calculate the angle between the shortest line segment from the physical seat corresponding to the seat ID to the top end of the viewing area and the plane of the viewing area; and a first selecting unit configured to select seat IDs corresponding to the angles within a preset range as target seat IDs.
Optionally, the selecting module provided in the present disclosure may comprise the following units: a second calculating unit configured to calculate the first angle between the shortest line segment from the physical seat corresponding to the seat ID to the right end of the viewing area and the plane of the viewing area, to calculate the second angle between the shortest line segment from the physical seat corresponding to the seat ID to the left end of the viewing area and the plane of the viewing area, according to seat parameters corresponding to the seat ID, and to take the sum of the first angle and the second angle as the third angle; and a second selecting unit configured to select seat IDs corresponding to the third angles within a preset range as target seat IDs.
Optionally, the selecting module provided in the present disclosure may comprise the following units: a third calculating unit configured according to seat parameters corresponding to seat IDs, to calculate the first angle between the shortest line segment from the physical seat corresponding to the seat ID to the top end of the viewing area and the plane of the viewing area; a third selecting unit configured to select seat IDs corresponding to the first angles within a first preset range as first target seat IDs. The selecting module further comprises: a fourth calculating unit configured to calculate the second angle between the shortest line segment from the physical seat corresponding to the first seat ID to the right end of the viewing area and the plane of the viewing area, to calculate the third angle between the shortest line segment from the physical seat corresponding to the first target seat ID to the left end of the viewing area and the plane of the viewing area, according to seat parameters corresponding to first target seat IDs, and to take the sum of the second angle and the first angle as the fourth angle; and a fourth selecting unit configured to select first target seat IDs corresponding fourth angles within a second preset range as target seat IDs.
Optionally, the solution provided in the present disclosure may further comprise the following modules: a first determining module configured to determine whether the distance between the physical seat corresponding to the target seat ID and the tone source is smaller than the threshold; a first executing module configured to execute the outputting module if the distance between the physical seat corresponding to the target seat ID and the tone source is less than or equal to the threshold, and to output a prompting message of too far tone source if the distance between the physical seat corresponding to the target seat ID and the tone source is greater than the threshold.

Optionally, the solution provided in the present disclosure may further comprise the following modules: a second determining module configured to determine whether the target seat ID is history data; a second executing module configured to execute the outputting module if the target seat ID is history data, and to output a prompting message that the target seat ID is not history data when the target seat ID is not history data.

Optionally, the solution provided in the present disclosure may further comprise the following modules: a third determining module configured to determine whether time of occurrences of the target seat ID in history data is greater than or equal to a threshold; a third executing module configured to execute the outputting module if the time of occurrences of the target seat ID in history data is greater than or equal to the threshold, and to output the prompting message that time of occurrences of the target seat ID in history data is smaller than the threshold if the time of occurrences of the target seat ID in the history data is smaller than the threshold.

For the device in the above-mentioned embodiments, specific ways in which modules execute operations have been described in detail in embodiments relating to the method and will not be elaborated any more here.

Embodiment III

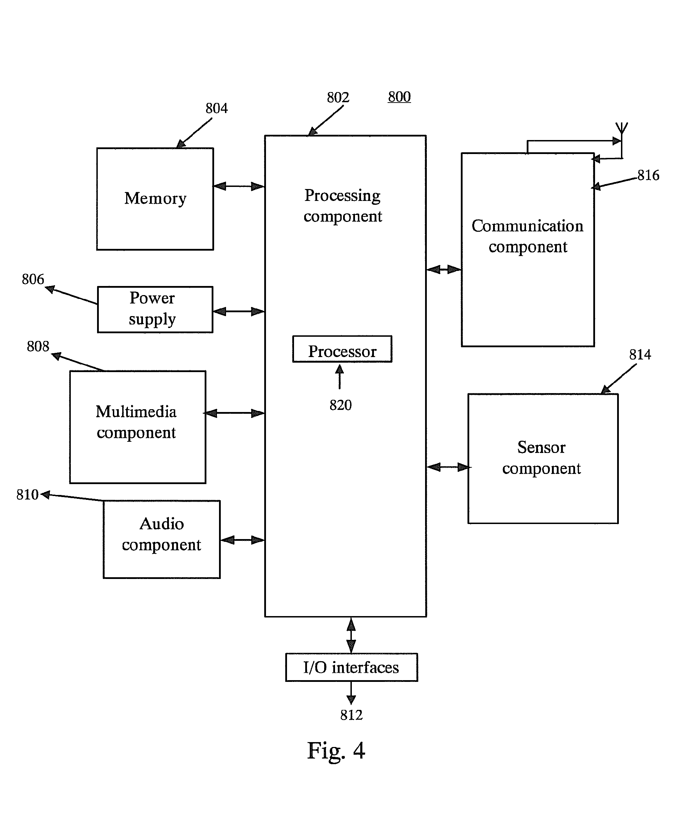

Fig. 4 is a block diagram of a prompting device for seat selection 800, according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 4, the device 800 may comprise one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may comprise one or more processors 820 to execute instructions to perform all or part of the steps in the above described methods. Moreover, the processing component 802 may comprise one or more modules which facilitate the interaction between the processing component 802 and other components. For instance, the processing component 802 may comprise a multimedia module to facilitate the interaction between the multimedia component 808 and the processing component 802.

The memory 804 is configured to store various types of data to support the operation of the device 800. Examples of such data comprise instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of a mobile terminal, causes the mobile terminal to perform prompting method for seat selection, the method includes: receiving a viewing field ID; determining seat IDs corresponding to the viewing field ID and seat parameters corresponding to the seat IDs in a database; according to the seat parameters corresponding to the seat ID, calculating an angle between a line segment from a physical seat corresponding to the seat ID to a preset position of the viewing area and a plane of the viewing area, and selecting seat IDs corresponding to the angles within a preset range as target seat IDs; outputting the target seat IDs.

It is to be noted that the present disclosure may apply not only to cinemas, but also to any scenarios that need to select seats for ticketing, such as a performance, a vocal concert, a theater and a large scale conference. In addition, the present disclosure can be applied not only in applications of mobile phones, but also be integrated in scenarios in which seats are selected with programs, such as various ticketing systems, PC computer software, and seat selection service of webpage. Therefore, the present disclosure has the following advantages:1. The present disclosure can obtain different results according to different performance fields and find out best seats considering difference of scenarios; 2. Two important audio-visual experience, vision and audition are considered; 3. User data is collected and analyzed and seat calculation is optimized in a personalized way according to different user preference.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

**Claims**

1. A prompting method for seat selection, **characterized by** comprising:

   receiving (S11) a viewing field ID;
   determining (S12) seat IDs corresponding to the viewing field ID and seat parameters corresponding to the seat IDs in a database;
   according to the seat parameters corresponding to the seat ID, calculating (S13) an angle between a line segment from a physical seat corresponding to the seat ID to a preset position of the viewing area and a plane of the viewing area, and selecting seat IDs corresponding to the angles within a preset range as target seat IDs; outputting (S14) the target seat IDs.

2. The prompting method for seat selection of claim 1, **characterized in that** the step of according to the seat parameters corresponding to the seat ID, calculating an angle between a line segment from a physical seat corresponding to the seat ID to a preset position of the viewing area and a plane of the viewing area, and selecting seat IDs corresponding to the angles within a preset range as target seat IDs comprises:

according to the seat parameters corresponding to the seat ID, calculating an angle between a shortest line segment from the physical seat corresponding to the seat ID to a top end of the viewing area and the plane of the viewing area, and selecting the seat IDs corresponding to the angles within the preset range as target seat IDs.

3. The prompting method for seat selection of claim 1, **characterized in that** the step of according to the seat parameters corresponding to the seat ID, calculating an angle between a line segment from a physical seat corresponding to the seat ID to a preset position of the viewing area and a plane of the viewing area, and selecting seat IDs corresponding to the angles within a preset range as target seat IDs comprises:

according to the seat parameters corresponding to the seat ID, calculating a first angle between a shortest line segment from the physical seat corresponding to the seat ID to a right end of the viewing area and the plane of the viewing area, calculating an second angle between a shortest line segment from the physical seat corresponding to the seat ID to a left end of the viewing area and the plane of the viewing area, taking a sum of the first angle and the second angle as a third angle, and selecting seat IDs corresponding to the third angles within a preset range as target seat IDs.

4. The prompting method for seat selection of claim 1, **characterized in that** the step of according to the seat parameters corresponding to the seat ID, calculating an angle between a line segment from a physical seat corresponding to the seat ID to a preset position of the viewing area and a plane of the viewing area, and selecting seat IDs corresponding to the angles within a preset range as target seat IDs comprises:

according to the seat parameters corresponding to the seat ID, calculating a first angle between a shortest line segment from the physical seat corresponding to the seat ID to a top end of the viewing area and the plane of the viewing area, and selecting seat IDs corresponding to the first angles within a first preset range as first target seat IDs;
according to seat parameters corresponding to the first target seat IDs, calculating an second angle between a shortest line segment from a physical seat corresponding to the first target seat ID to a right end of the viewing area and the plane of the viewing area, calculating a third angle between a shortest line segment from the physical seat corresponding to the first target seat ID to a left end of the viewing area and the plane of the viewing area, taking a sum of the second angle and the third angle as a fourth angle, and selecting first target seat IDs corresponding to the fourth angles within a second preset range as target seat IDs.

5. The prompting method for seat selection according to anyone of claims 1 to 4, **characterized in that** the method further comprises:

determining whether a distance between the physical seat corresponding to the target seat ID and a tone source is smaller than a threshold;
executing the step of outputting the target seat IDs if the distance between the physical seat corresponding to the target seat IDs and the tone source is less than or equal to the threshold;
outputting a prompting message that the tone source is too far away if the distance between the physical seat corresponding to the target seat IDs and the tone source is greater than the threshold.

6. The prompting method for seat selection according to anyone of claims 1 to 5, **characterized in that** the method further comprises:

determining whether the target seat IDs are history data;
executing the step of outputting the target seat IDs if the target seat IDs are history data;
outputting a prompting message that the target seat IDs are not history data if the target seat IDs are not history data.

7. The prompting method for seat selection of according to anyone of claims 1 to 6, **characterized in that** the method further comprises:

determining whether a time of occurrences of the target seat IDs in history data is greater than or equal to a threshold;

executing the step of outputting the target seat IDs if the time of occurrences of the target seat IDs in history data is greater than or equal to a threshold;

outputting a prompting message that the time of occurrences of the target seat IDs in history data is smaller than the threshold if the time of occurrences of the target seat IDs in history data is smaller than the threshold.

8. A prompting device for seat selection, **characterized by** comprising:

a receiving module (11) configured to receive a viewing field ID;

a determining module (12) configured to determine seat IDs corresponding to the viewing field ID and seat parameters corresponding to the seat IDs in a database;

a selecting module (13) configured, according to seat parameters corresponding to the seat ID, to calculate an angle between a line segment from a physical seat corresponding to the seat ID to a preset position of the viewing area and a plane of the viewing area, and to select seat IDs corresponding to the angles within a preset range as target seat IDs;

an outputting module (14) configured to output the target seat IDs.

9. The prompting device for seat selection of claim 8, **characterized in that** the selecting module comprises:

a first calculating unit configured, according to the seat parameters corresponding to the seat ID, to calculate an angle between a shortest line segment from the physical seat corresponding to the seat ID to a top end of the viewing area and the plane of the viewing area;

a first selecting unit configured to select the seat IDs corresponding to the angles within a preset range as target seat IDs.

10. The prompting device for seat selection of claim 8, **characterized in that** the selecting module comprises:

a second calculating unit configured to calculate a first angle between a shortest line segment from the physical seat corresponding to the seat ID to a right end of the viewing area and the plane of the viewing area, to calculate a second angle between a shortest line segment from the physical seat corresponding to the seat ID to a left end of the viewing area and the plane of the viewing area, according to the seat parameters corresponding to the seat ID; and to take a sum of the first angle and the second angle as a third angle;

a second selecting unit configured to select seat IDs corresponding to the first angles within a preset range as target seat IDs.

11. The prompting device for seat selection of claim 8, **characterized in that** the selecting module comprises:

a third calculating unit configured, according to the seat parameters corresponding to the seat ID, to calculate a first angle between a shortest line segment from the physical seat corresponding to the seat ID to a top end of the viewing area and the plane of the viewing area;

a third selecting unit configured to select seat IDs corresponding to the first angles within a first preset range as first target seat IDs;

a fourth calculating unit configured to calculate a second angle between a shortest line segment from the physical seat corresponding to the first target seat ID to a right end of the viewing area and the plane of the viewing area, to calculate a third angle between a shortest line segment from the physical seat corresponding to the first target seat ID to a left end of the viewing area and the plane of the viewing area, according to the seat parameters corresponding to the first target seat ID; and to take a sum of the second angle and the third angle as a fourth angle;

a fourth selecting unit configured to select first target seat IDs corresponding to the fourth angles within a second preset range as target seat IDs.

12. The prompting device for seat selection of claim 8, **characterized in that** the device further comprises:

a first determining module configured to determine whether a distance between the physical seat corresponding to the target seat ID and a tone source is smaller than a threshold;

a first executing module configured to execute the outputting module if the distance between the physical seat corresponding to the target seat ID and the tone source is less than or equal to the threshold; and to output a prompting message that the tone source is too far away when the distance between the physical seat corresponding to the target seat IDs and the tone source is greater than the threshold.

13. A prompting device for seat selection, **characterized by** comprising:

a processor;

a memory for storing instructions executable by the processor;

wherein, the processor is configured to perform:

receiving a viewing field ID;
determining seat IDs corresponding to the viewing field ID and seat parameters corresponding to the seat IDs in a database;
according to seat parameters corresponding to the seat ID, calculating an angle between a line segment from a physical seat corresponding to the seat ID to a preset position of the viewing area and a plane of the viewing area, and selecting seat IDs corresponding to the angles within a preset range as target seat IDs;
outputting the target seat IDs.

14. A computer program including instructions for executing the steps of a prompting method for seat selection according to any one of claims 1 to 7 when said program is executed by a computer.

15. A recording medium readable by a computer and having recorded thereon a computer program including instructions for executing the steps of a prompting method for seat selection according to any one of claims 1 to 7.

Receiving a viewing field ID    S11

Determining seat IDs corresponding to the viewing field ID and seat parameters corresponding to the seat IDs in a database    S12

Calculating an angle between a line segment from a physical seat corresponding to the seat ID to a preset position of the viewing area and a plane of the viewing area , and selecting seat IDs corresponding to the angles within a preset range as target seat IDs    S13

Outputting the target seat IDs    S14

Fig. 1

Fig. 2

Fig. 3

Fig. 4

Europäisches
Patentamt

European
Patent Office

Office européen
des brevets

**EUROPEAN SEARCH REPORT**

Application Number

EP 15 15 1144

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/082879 A1 (MILLER BRENT [US] ET AL) 27 June 2002 (2002-06-27) * abstract; figures 1,7,22-24,29A * * paragraphs [0053] - [0056], [0060], [0070], [0072], [0074], [0196], [0216], [0217], [0221], [0235] - [0238], [0248], [0250] * ----- | 1-15 | INV. G06Q10/02 |
| X | US 2012/226589 A1 (GEISLER DAN [IL] ET AL) 6 September 2012 (2012-09-06) * abstract * * paragraph [0060] * ----- | 1-15 | |

TECHNICAL FIELDS
SEARCHED      (IPC)

G06Q

The present search report has been drawn up for all claims

| Place of search | Date of completion of the search | Examiner |
|---|---|---|
| The Hague | 29 September 2015 | Berlea, Alexandru |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 15 15 1144

This annex lists the patent family members relating to the patent documents cited in  the above-mentioned European search report.
The members are as contained in the European Patent Office EDP file on
The European Patent Office is in no way liable for these particulars which are merely given for the purpose of information.

29-09-2015

| Patent document cited in search report | Publication date | Patent family member(s) | Publication date |
|---|---|---|---|
| US 2002082879 A1 | 27-06-2002 | NONE | |
| US 2012226589 A1 | 06-09-2012 | GB      2448222 A<br>US   2008255889 A1<br>US   2012226589 A1 | 08-10-2008<br>16-10-2008<br>06-09-2012 |

EPO FORM P0459